# EUROPEAN PATENT APPLICATION

(11) **EP 4 243 311 A1**
(43) Date of publication of application: **13.09.2023**
(21) Application number: 21935589.8
(22) Date of filing: 09.04.2021
(51) Int. Cl.: H04L 1/16

(54) **CHANNEL DETERMINATION METHODS, CHANNEL TRANSMISSION METHODS, ELECTRONIC DEVICES, AND STORAGE MEDIUMS**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); XU, Jing, Dongguan, Guangdong 523860 (CN)
(74) Representative: Mewburn Ellis LLP
(86) International application number: PCT/CN2021/086187
(87) International publication number: WO 2022/213362

(57) **Abstract**

Provided is a channel determination method, which includes the following. A terminal device determines a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first uplink control information (UCI), and the second uplink control channel resource is used for transmitting second UCI, the second UCI has a priority higher than the first UCI, and the first UCI satisfies a first agreed condition. The terminal device determines non-overlapping uplink control channel resources in the first time unit based on the first uplink control channel resource set. Provided is another channel determination method, a channel transmission method, an electronic device, and storage medium.

## Description

### TECHNICAL FIELD

This disclosure relates to the field of wireless communication technology, and particularly relates to a channel determination method, a channel transmission method, an electronic device, and a storage medium.

### BACKGROUND

If a terminal device needs to transmit multiple uplink channels in one time-unit, there may be a case where the multiple uplink channels overlap. In this scenario, how to determine one uplink channel for transmitting uplink control information carried by all the uplink channels in the time unit so as to improve the efficiency of uplink control information transmission has not been specified yet.

### SUMMARY

Disclosed herein are implementations of a channel determination method, a channel transmission method, an electronic device, and a storage medium, which can determine one uplink channel for transmitting uplink control information in a case where multiple uplink channels that need to be transmitted in one time-unit overlap, so as to improve the efficiency of uplink control information transmission.

In a first aspect, provided is a channel determination method. The method includes the following. A terminal device determines a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first uplink control information (UCI), and the second uplink control channel resource is used for transmitting second UCI, the second UCI has a priority higher than the first UCI, and the first UCI satisfies a first agreed condition. The terminal device determines non-overlapping uplink control channel resources in the first time unit based on the first uplink control channel resource set.

In a second aspect, provided is a channel determination method. The method includes the following. A network device determines a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first UCI, and the second uplink control channel resource is used for transmitting second UCI, the second UCI has a priority higher than the first UCI, and the first UCI satisfies a first agreed condition. The network device determines non-overlapping uplink control channel resources in the first time unit based on the first uplink control channel resource set.

In a third aspect, provided is a channel transmission method. The method includes the following. A terminal device is configured to transmit multiple uplink control channels in a second time unit, where the multiple uplink control channels includes a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap. If a second agreed condition is satisfied, the terminal device transmits the fourth UCI and the fifth UCI through one channel in the second time unit.

In a fourth aspect, provided is a channel transmission method. The method includes the following. A network device configures a terminal device to transmit multiple uplink control channels in a second time unit, where the multiple uplink control channels includes a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap. The network receives the fourth UCI and the fifth UCI through one channel within the second time unit if a second agreed condition is satisfied.

In a fifth aspect, provided is a terminal device. The terminal device includes a first processing unit and a second processing unit. The first processing unit is configured to determine a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first UCI, and the second uplink control channel resource is used for transmitting second UCI, the second UCI has a priority higher than the first UCI, and the first UCI satisfies a first agreed condition. The second processing unit is configured to determine non-overlapping uplink control channel resources in the first time unit based on the first uplink control channel resource set.

In a sixth aspect, provided is a network device. The network device includes a third processing unit and a fourth processing unit. The third processing unit is configured to determine a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first UCI, and the second uplink control channel resource is used for transmitting second UCI, the second UCI has a priority higher than the first UCI, and the first UCI satisfies a first agreed condition. The fourth processing unit is configured to determine non-overlapping uplink control channel resources in the first time unit based on the first uplink control channel resource set.

In a seventh aspect, provided is a terminal device. The terminal device is configured to transmit multiple uplink control channels in a second time unit, where the multiple uplink control channels includes a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap. The terminal device includes a second transmitting unit, which is configured to transmit the fourth UCI and the fifth UCI through one channel in the second time unit if a second agreed condition is satisfied.

In an eighth aspect, provided is a network device. The network device includes a third transmitting unit and a second receiving unit. The third transmitting unit is configured to configure a terminal device to transmit multiple uplink control channels in a second time unit, where the multiple uplink control channels includes a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap. The second receiving unit is configured to receive the fourth UCI and the fifth UCI through one channel within the second time unit if a second agreed condition is satisfied.

In a ninth aspect, provided is a terminal device. The terminal device includes a processor and a memory storing computer programs that can run on the processor, where when running the computer programs, the processor is configured to make a terminal device equipped with the processor to perform steps of the above channel determination method.

In a tenth aspect, provided is a network device. The network device includes a processor and a memory storing computer programs that can run on the processor, where when running the computer programs, the processor is configured to make a network device equipped with the processor to perform steps of the above channel determination method.

In an eleventh aspect, provided is a terminal device. The terminal device includes a processor and a memory storing computer programs that can run on the processor, where when running the computer programs, the processor is configured to make a terminal device equipped with the processor to perform steps of the above channel determination method.

In a twelfth aspect, provided is a network device. The network device includes a processor and a memory storing computer programs that can run on the processor, where when running the computer programs, the processor is configured to make a network device equipped with the processor to perform steps of the above channel determination method.

In a thirteenth aspect, provided is a chip. The chip includes a processor configured to invoke and run computer programs in a memory, to cause a terminal device equipped with the chip to perform the channel determination method or channel transmission method.

In a fourteenth aspect, provided is a chip. The chip includes a processor configured to invoke and run computer programs in a memory, to cause a network device equipped with the chip to perform the channel determination method or channel transmission method.

In a fifteenth aspect, provided is a storage medium. The storage medium stores executable programs which, when executed by a processor, cause a terminal device equipped with the processor to implement the above channel determination method or channel transmission method.

In a sixteenth aspect, provided is a storage medium. The storage medium stores executable programs which, when executed by a processor, cause a network device equipped with the processor to implement the above channel determination method or channel transmission method.

In a seventeenth aspect, provided is a computer program product, including computer program instructions which cause a computer to perform the above channel determination method or channel transmission method.

In an eighteenth aspect, provided is a computer program product, including computer program instructions which cause a computer to perform the above channel determination method or channel transmission method.

In a nineteenth aspect, provided is a computer program which causes a computer to perform the above channel determination method or channel transmission method.

In a twentieth aspect, provided is a computer program which causes a computer to perform the above channel determination method or channel transmission method.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is an optional schematic flowchart of multiplexing according to an implementation of the disclosure.
FIG. 2 is another optional schematic flowchart of multiplexing according to an implementation of the disclosure.
FIG. 3 is a schematic structural diagram of a communication system according to an implementation of the disclosure.
FIG. 4 is a schematic flowchart of an optional processing flow of a channel determination method according to an implementation of the disclosure.
FIG. 5 is a schematic flowchart of another optional processing flow of a channel determination method according to an implementation of the disclosure.
FIG. 6 is a schematic diagram of a first PUCCH resource set according to an implementation of the disclosure.
FIG. 7 is a schematic diagram of an optional processing flow of a channel transmission method according to an implementation of the disclosure.
FIG. 8 is a schematic diagram of another optional processing flow of a channel transmission method according to an implementation of the disclosure.
FIG. 9 is another optional schematic flowchart of multiplexing according to an implementation of the disclosure.
FIG. 10 is a schematic structural diagram of optional components of a terminal device according to an implementation of the disclosure.
FIG. 11 is a schematic structural diagram of optional components of a network device according to an implementation of the disclosure.
FIG. 12 is another schematic structural diagram of optional components of a terminal device according to an implementation of the disclosure.
FIG. 13 is another schematic structural diagram of optional components of a network device according to an implementation of the disclosure.
FIG. 14 is a schematic structural diagram of hardware components of an electronic device according to an implementation of the disclosure.

### DETAILED DESCRIPTION

To make the features and technical contents of the embodiments of the disclosure more comprehensive, the following describes in detail implementation of the embodiments of the present disclosure with reference to the accompanying drawings. The accompanying drawings are only used for reference description and are not intended to limit the embodiments of the present disclosure.

Before describing the embodiments of the present disclosure, related content will be briefly described.

In 3rd generation partnership project (3GPP) release 15 (Rel-15) for a new radio (NR) system, it is specified that multiple overlapping physical uplink control channels (PUCCHs) or multiple overlapping PUCCHs and physical uplink shared channels (PUSCHs) can be multiplexed onto one channel only when a multiplexing time sequence relationship is satisfied. Otherwise, the terminal device will determine that it is abnormal. The timing relationship is to ensure that the terminal device has enough time to determine whether information carried on different uplink channels needs to be multiplexed, and determine the time required for uplink control information (UCI) concatenation and encoding in multiplexing. The 3GPP implements UCI multiplexing through the following method.

A set of non-overlapping PUCCH resources is determined within one time-slot ("slot" for short) with the following method.
1. Set set Q, where set Q includes all PUCCHs to be transmitted (i.e. a network device indicated to a terminal device that needs to be transmitted) in a time slot.
2. Set PUCCH resource A, where PUCCH resource A is the PUCCH with the earliest starting time in set Q, and if there are multiple PUCCH resources with the same starting time, select the PUCCH resource with the maximum duration therefrom. If there are several PUCCH resources having the same starting time and duration, randomly select one PUCCH resource from the PUCCH resources with the same starting time and duration.
3. PUCCH resource(s) in set Q that overlaps with PUCCH resource A form set X.
4. Determine PUCCH resource B according to PUCCH resource A and PUCCH resource set X, where PUCCH resource B is used for multiplexing the UCI carried by PUCCH resource A and PUCCH resource set X. In set Q, use PUCCH resource B to replace PUCCH resource A and PUCCH resource set X.
5. If there are still overlapping PUCCH resources in set Q after step 4, empty set X, and repeat the above operations 2 to 4 until there is no overlapping PUCCH resource in set Q.

Finally, if one PUCCH resource in set Q having non-overlapping PUCCH resources overlaps with a PUSCH resource, UCI information carried by the PUCCH resource is multiplexed onto the PUSCH resource for transmission. Otherwise, the UCI is transmitted using PUCCH resources.

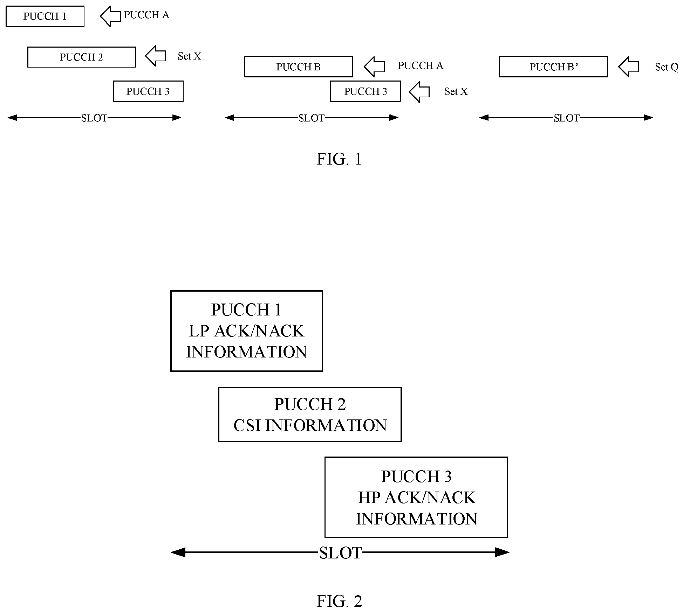

An optional flow of multiplexing is illustrated in FIG. 1, where PUCCHs to be transmitted in a time slot are PUCCH 1, PUCCH 2 and PUCCH 3. Where PUCCH 1 overlaps with PUCCH 2, and PUCCH 2 overlaps with PUCCH 3. PUCCH B obtained based on PUCCH 1 and PUCCH 2 is used for multiplexing UCI carried by PUCCH 1 and PUCCH 2. However, PUCCH B overlaps PUCCH 3, and after operations 2 to 4 are executed again, PUCCH B' is obtained, that is, set Q includes PUCCH resource B'. All UCI carried by PUCCH 1, PUCCH 2 and PUCCH 3 are multiplexed onto the PUCCH resource B'.

In Rel-16, in order to better support an ultra-reliable low latency communication (URLC) service, a physical channel may be configured with a 2-level priority, that is, a high priority or a low priority. Generally, a URL LC service is transmitted through a high priority channel. If multiple uplink channels with different priorities overlap, for a low priority channel, a terminal device determines a multiplexing channel by using the foregoing work mechanism determined in Rel-15. If the high priority uplink channel overlaps with the low priority uplink channel (a multiplexed channel or a non-multiplexed channel), the low priority channel is dropped and only the high priority channel is transmitted. If multiple high priority channels overlap, a multiplexing channel is determined by using a working mechanism determined by Rel-15, and reliability and latency requirement of the high priority channels are ensured by sacrificing transmission efficiency of the low-priority channels.

In Rel-17, it is intended to minimize the impact of high priority channel transmission on low priority channel transmission. It is therefore proposed to support multiplexing of different priority information onto one uplink channel for transmission, but in the ongoing discussion, multiplexing of information with different priorities is not applicable to all uplink control information, and specifically support multiplexing combinations, including: high priority (HP) hybrid automatic repeat request (HARQ) feedback information (ACK/NACK) and low priority (LP) HARQ feedback information are multiplexed onto a PUCCH; the LP HARQ feedback information and the HP scheduling request (SR) are multiplexed onto a PUCCH; and the LP HARQ feedback information, the HP HARQ feedback information, and the HP SR are multiplexed onto a PUCCH.

Another optional flow of multiplexing is illustrated in FIG. 2, where PUCCH 1 is used for carrying LP HARQ feedback information, PUCCH 2 is used for carrying low priority channel state information (CSI), and PUCCH 3 is used for carrying HP HARQ feedback information. If a set of non-overlapping PUCCH resources, i.e., set Q, in a timeslot or sub-timeslot is determined according to the mechanism determined in Rel-15, then PUCCH resource B' will be obtained for transmission of multiplexed information, i.e., the process illustrated in FIG. 1. However, the HP HARQ feedback information cannot be multiplexed with the CSI, and the obtained PUCCH resource B' is for multiplexing of the LP HARQ feedback information and the HP HARQ feedback information. However, PUCCH 1 and PUCCH 3 do not overlap with each other and can be transmitted independently.

Compared with independent transmission, the multiplexing transmission efficiency is lower. In order to ensure the reliability of high priority UCI, the multiplexed low priority UCI may occupy more resources for transmission so as to achieve the same reliability as that of the high priority UCI. Furthermore, multiplexing may introduce additional latency required for UCI concatenation and coding.

The technical solutions of the implementations of the disclosure may be applied to various communication systems, for example, a global system of mobile communication (GSM) system, a code division multiple access (CDMA) system, a wideband code division multiple access (WCDMA) system, a general packet radio service(GPRS), a long term evolution (LTE) system, a LTE frequency division duplex (FDD) system, a LTE time division duplex (TDD) system, an advanced long term evolution (LTE-A) system, a new radio (NR) system, an evolved system of the NR system, a LTE-based access to unlicensed spectrum (LTE-U) system, a NR-based access to unlicensed spectrum (NR-U) system, a universal mobile telecommunication system(UMTS), a worldwide interoperability for microwave access(WiMAX) system, a wireless local area networks (WLAN), a wireless fidelity (Wi-Fi), a next generation communication system or other communication system, etc.

The system architecture and service scenarios described in the implementations of the disclosure are intended to more clearly illustrate the technical solutions of the implementations of the disclosure, and do not limit the technical solutions provided in the implementations of the disclosure. A person of ordinary skill in the art can know that, along with the evolution of a network architecture and the appearance of a new service scenario, the technical solutions provided in the implementations of the disclosure are applicable to similar technical problems.

The network device involved in the implementations of the disclosure can be an ordinary base station (such as a NodeB or an eNB or a gNB), a new radio controller (NR controller), a centralized unit, a new radio base station, a radio remote module, a micro base station, a relay, a distributed unit, a transmission reception point (TRP), a transmission point (TP) or any other device. The implementations of the disclosure do not limit specific technologies and specific device forms used by the network device. For ease of description, in all implementations of the disclosure, the apparatus for providing a wireless communication function for a terminal device is generally referred to as network device.

In the implementations of the disclosure, the terminal device may be any terminal, for example, the terminal device may be a user equipment of machine type communication. That is to say, the terminal device may also be referred to as a user equipment (UE), a mobile station (MS), a mobile terminal, a terminal, etc. The terminal device may communicate with one or more core networks through a radio access network (RAN). For example, the terminal device may be a mobile phone (or referred to as a "cellular" phone), a computer with a mobile terminal, or the like. For example, the terminal device may also be a portable device, a pocket-sized device, a handheld device, a computer built-in device, or a vehicle-mounted mobile device, which can exchange language and/or data with the radio access network. The implementation of the disclosure is not specifically limited thereto.

Optionally, the network device and the terminal device may be deployed on land, including indoor or outdoor, handheld, or vehicle-mounted. It may also be deployed on a water surface, and may also be deployed on an aerial airplane, a balloon, and an artificial satellite. The implementations of the disclosure do not limit application scenarios of the network device and the terminal device.

Optionally, communication between a network device and a terminal device or between a terminal device and a terminal device can be performed with a licensed spectrum, or with an unlicensed spectrum, or with both a licensed spectrum and an unlicensed spectrum. Communication between a network device and a terminal device or between a terminal device and a terminal device may be performed by using a frequency spectrum below 7 GHz, by using a frequency spectrum above 7 GHz, or by using a frequency spectrum below 7 GHz and a frequency spectrum above 7 GHz at the same time. The implementations of the disclosure do not limit spectrum resources used between a network device and a terminal device.

Generally, a traditional communication system supports a limited number of connections and is easy to implement. However, with the development of communication technologies, a mobile communication system not only supports traditional communication, but also supports, for example, device to device (D2D) communication, machine to machine (M2M) communication, machine type communication (MTC), and vehicle to vehicle (V2V) communication. The implementations of the disclosure may also be applied to these communication systems.

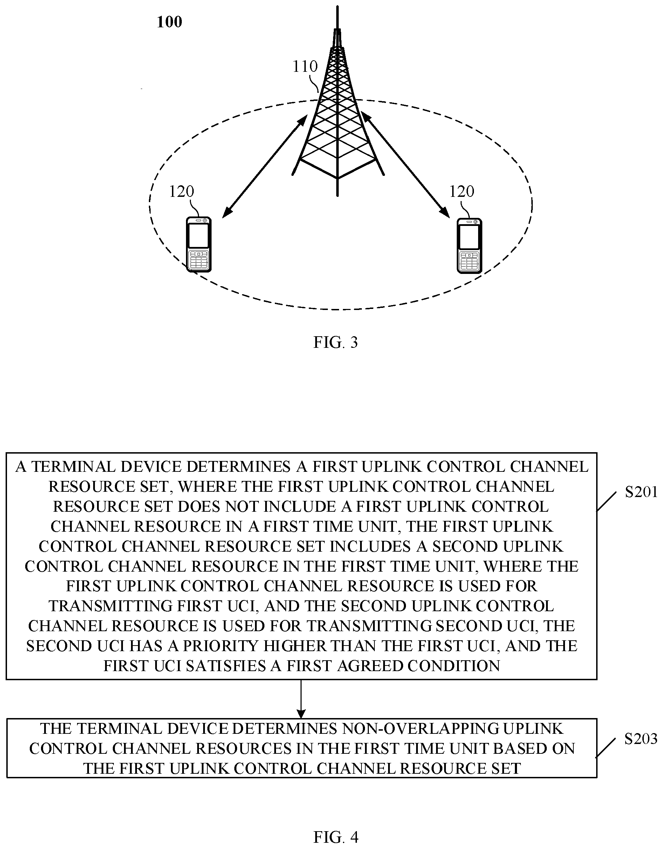

Exemplary, FIG. 1 illustrates a communication system 100 applied in implementations. As illustrated in FIG. 3, the communication system 100 may include a network device 110. The network device 110 may be a device that can communicate with a terminal device 120 (also referred to as "communication terminal" or "terminal"). The network device 110 can provide a communication coverage for a specific geographical area and communicate with terminal devices in the coverage area. The network device 110 may be a base transceiver station (BTS) in the GSM or in the CDMA system, or may be a NodeB (NB) in the WCDMA system, or may be an evolutional Node B (eNB or eNodeB) in the LTE system, or a radio controller in a cloud radio access network (CRAN). Alternatively, the network device may be a mobile switching center, a relay station, an access point, an in-vehicle device, a wearable device, a hub, a switch, a bridge, a router, a network-side device in a 5G network, or a network device in a future evolved public land mobile network (PLMN).

The communication system 100 further includes at least one terminal device 120 located in the coverage area of the network device 110. The "terminal device" referred to herein can include but is not limited to a device configured to communicate via a wired line, another data connection/network, and/or a wireless interface, a device which is part of another terminal device and configured to receive/transmit communication signals, or an Internet of things (IoT) device. Examples of the wired line may include, but are not limited to, a public switched telephone network (PSTN), a digital subscriber line (DSL), a digital cable, a direct connection cable. Examples of the wireless interface may include, but are not limited to, a wireless interface for a cellular network, a wireless local area network (WLAN), a digital television network (such as a digital video broadcasting-handheld (DVB-H) network), a satellite network, an amplitude modulation-frequency modulation (AM-FM) broadcast transmitter. A terminal device configured to communicate via a wireless interface may be called a "wireless communication terminal", a "wireless terminal", and/or a "mobile terminal". Examples of a mobile terminal may include, but are not limited to, a satellite telephone or cellular telephone, a personal communication system (PCS) terminal integrated with functions of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and/or a conventional laptop, a handheld receiver, or other electronic devices equipped with radio telephone receiver. The terminal device may refer to an access terminal, a user equipment (UE), a subscriber unit, a subscriber station, a mobile station, a remote station, a remote terminal, a mobile device, a user terminal, a terminal, a wireless communication device, a user agent, or a user device. The access terminal may be a cellular radio telephone, a cordless telephone, a session initiation protocol (SIP) telephone, a wireless local loop (WLL) station, a PDA, a handheld device with wireless communication functions, a computing device, other processing devices coupled with a wireless modem, an in-vehicle device, a wearable device, a terminal device in the 5G network, a terminal device in the future evolved PLMN, etc.

As an example, terminal devices 120 can communicate with each other through device to device (D2D) communication.

As an example, the 5G system or 5G network can also be referred to as an NR system or NR network.

FIG. 3 exemplarily illustrates one network device and two terminal devices. The communication system 100 may also include multiple network devices, and there can be other numbers of terminal devices in a coverage area of each of the network devices, which is not limited herein.

The communication system 100 may further include other network entities such as a network controller, a mobile management entity, or the like, and the disclosure is not limited in this regard.

According to implementations, a device with communication functions in a network/system can be referred to as a "communication device". Taking the communication system 100 illustrated in FIG. 3 as an example, the communication device may include the network device 110 and the terminal device(s) 120 that have communication functions. The network device 110 and the terminal device(s) 120 can be the devices described above and will not be repeated herein. The communication device may further include other devices such as a network controller, a mobile management entity, or other network entities in the communication system 100, the disclosure is not limited in this regard.

It should be understood that, in various implementations of the disclosure, a sequence number of each implementation process does not imply an execution sequence, and an execution sequence of each process should be determined according to a function and an internal logic thereof, which should not constitute any limitation to the implementation process of the implementations of the disclosure.

As illustrated in FIG. 4, an optional processing flow of a channel determination method according to an implementation of the disclosure at least includes the following.

S201, a terminal device determines a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first uplink control information (UCI), and the second uplink control channel resource is used for transmitting second UCI, the second UCI has a priority higher than the first UCI, and the first UCI satisfies a first agreed condition.

In some implementations, the terminal device is configured to transmit multiple PUCCHs in the first time unit, and at least two PUCCHs in the multiple PUCCHs overlap. As an example, the network device configures the terminal device to transmit two or more than two PUCCHs in the first time unit, and at least two PUCCHs among the multiple PUCCHs transmitted by the terminal device in the first time unit overlap. As an example, the PUCCH overlapping may refer to that PUCCH resources overlap in time-domain.

In some implementations, the first time unit is a time unit corresponding to the second UCI, or the first time unit is a time unit corresponding to the first UCI, or the first time unit is the minimum between the time unit corresponding to the first UCI and the time unit corresponding to the second UCI, or the first time unit is the maximum between the time unit corresponding to the first UCI and the time unit corresponding to the second UCI.

As an example, the time unit corresponding to the first UCI may be a time unit corresponding to a PUCCH used for transmitting the first UCI. The time unit corresponding to the second UCI may be a time unit corresponding to a PUCCH used for transmitting the second UCI. The shortest time unit may be a time unit having the smallest number of time-domain symbols, and the longest time unit may be a time unit having the largest number of time-domain symbols. For example, the number of time domain symbols in the time unit corresponding to the first UCI is six, and the number of time domain symbols in the time unit corresponding to the second UCI is eight. If the first time unit is the shortest time unit among the time unit corresponding to the first UCI and the time unit corresponding to the second UCI, the first time unit is the time unit corresponding to the first UCI. If the first time unit is the longest time unit among the time unit corresponding to the first UCI and the time unit corresponding to the second UCI, the first time unit is the time unit corresponding to the second UCI.

In some implementations, the first agreed condition may include: the first UCI and the second UCI cannot be multiplexed. For example, the first UCI and the second UCI cannot be multiplexed may refer to that the first UCI and the second UCI cannot be transmitted on the same uplink channel.

In some implementations, the first agreed condition is an agreed condition regarding information carried by the first UCI and information carried by the second UCI. For example, the information carried by the first UCI may be information carried by the first UCI or the information indicated by the first UCI, and the information carried by the second UCI may be information carried by the second UCI or the information indicated by the second UCI.

In some implementations, the first UCI satisfying the first agreed condition may include low priority (LP) channel state information (CSI) and/or LP scheduling request (SR), and the second UCI satisfying the first agreed condition may include high priority (HP) HARQ ACK/NACK. The CSI transmitted through the PUCCH may be an LP CSI by default.

In some implementations, the first UCI satisfying the first agreed condition may include LP CSI, and the second UCI satisfying the first agreed condition may include HP SR. The CSI transmitted through the PUCCH may be an LP CSI by default.

In some implementations, the terminal device may determine the first uplink channel resource set as follows. The terminal device determines a second uplink control channel resource set, where the second uplink control channel resource set includes all uplink control channel resources in the first time unit; the terminal device removes the first uplink control channel resource in the second uplink control channel resource set to obtain the first uplink control channel resource set. As an example, the first uplink control channel resource set consists of uplink control channel resources in the second uplink control channel resource set except the first uplink control channel resource, and the second uplink control channel resource set includes all uplink control channel resources in the first time unit.

In some implementations, if the first uplink control channel resource is to be removed from the second uplink control channel resource set, the terminal device will drop the first PUCCH, cancel the PUCCH, or skip the first PUCCH; or drop the first UCI carried by the first PUCCH, cancel the first UCI, or skip the first UCI.

In some implementations, the first time unit may be one frame, one sub-frame, one slot, one sub-slot, or at least one symbol.

In some implementations, if the first PUCCH overlaps with the third PUCCH, the terminal device drops the first PUCCH. In other embodiments, if the first PUCCH overlaps with the third PUCCH, the terminal device transmits third UCI carried by the third PUCCH. The third PUCCH may be one of PUCCH resources that overlap in the first time unit determined based on the first PUCCH resource set. As an example, the first PUCCH overlaps with the third PUCCH may refer to that the first PUCCH resource and the third PUCCH resource overlap in time domain.

S203: the terminal device determines non-overlapping uplink control channel resources in the first time unit based on the first uplink control channel resource set.

In some implementations, the terminal device determines the non-overlapping uplink control channel resources in the first time unit based on the first uplink control channel resource set as follows.
1) Set PUCCH resource A, where PUCCH resource A is the PUCCH having the earliest starting time in the first uplink control channel resource set. If the PUCCH resource with the earliest starting time in the first PUCCH resource set is two or more PUCCH resources, a PUCCH resource with the earliest starting time and the longest (that is, maximum) duration will be selected as the PUCCH resource A. If the PUCCH resource with the earliest starting time and the longest duration is two or two PUCCH resources, one PUCCH resource will be selected from the multiple PUCCH resources with the earliest starting time and the longest duration as the PUCCH resource A.
2) PUCCH resources that overlap with PUCCH resource A among the first PUCCH resource set constitutes PUCCH resource set X.
3) Determine PUCCH resource B according to PUCCH resource A and PUCCH resource set X, where PUCCH resource B is used for transmitting all UCI carried by PUCCH resource A and PUCCH resource set X. In the first PUCCH resource set, PUCCH resource A and PUCCH resource set X are replaced with PUCCH resource B.
4) If an overlapping PUCCH resource still exists in the first PUCCH resource set after execution of 3), empty PUCCH resource set X, and repeat execution of 1) to 3) until there is no overlapping PUCCH resource in the first PUCCH resource set.

It should be noted that the foregoing 1) to 4) are only used to make the description clearer, but do not limit an execution sequence of the terminal device in determining, based on the first uplink control channel resource set, the non-overlapping uplink control channel resources in the first time unit, and the execution sequence should be determined by functions and internal logic of the terminal device.

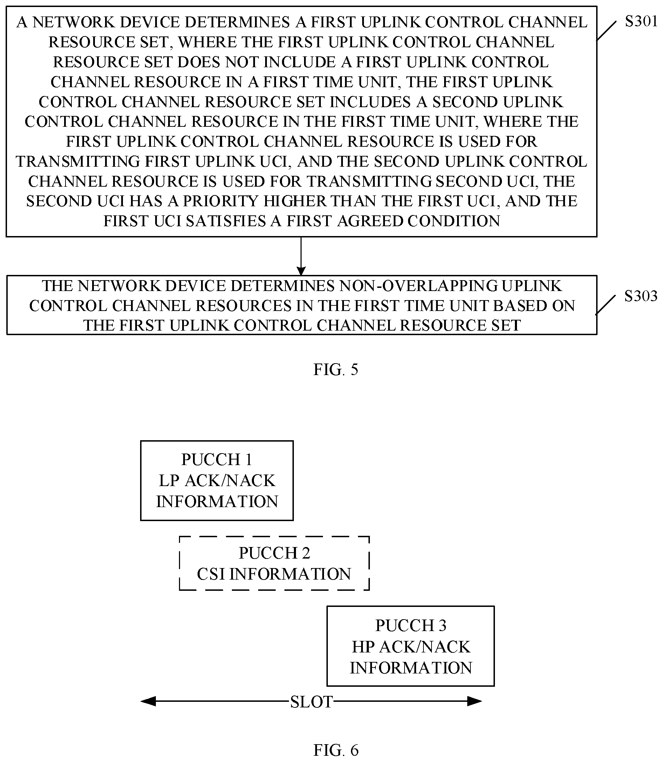

As illustrated in FIG. 5, another possible processing flow of the channel determination method according to an implementation of the disclosure may at least include the following steps.

S301, a network device determines a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first uplink UCI, and the second uplink control channel resource is used for transmitting second UCI, the second UCI has a priority higher than the first UCI, and the first UCI satisfies a first agreed condition.

In some implementations, descriptions of the first uplink control channel resource set, the first agreed condition, the first UCI, and the second UCI are the same as descriptions of the first uplink control channel resource set, the first agreed condition, the first UCI, and the second UCI in the foregoing S201, and are not further described herein.

S303, the network device determines non-overlapping uplink control channel resources in the first time unit based on the first uplink control channel resource set.

In some implementations, the process in which the network device determines the non-overlapping uplink control channel resources in the first time unit based on the first uplink control channel resource set is the same to the process of S203 in which the terminal device determines the non-overlapping uplink control channel resources in the first time unit based on the first uplink control channel resource set, and will not be repeated herein. The difference between S303 and S203 lies in that S303 is performed by the network device, while S203 is performed by the terminal device.

Taking the multiplexing illustrated in FIG. 2 as an example, PUCCH 1 is used for carrying LP HARQ feedback information, PUCCH 2 is used for carrying CSI information, and PUCCH 3 is used for carrying HP HARQ feedback information. The terminal device and/or the network device first determines that the second PUCCH resource set includes PUCCH 1, PUCCH 2, and PUCCH 3. Since the CSI and the HP HARQ feedback information cannot be multiplexed onto the same PUCCH, the PUCCH 2 is removed from the second PUCCH resource set to obtain the first PUCCH resource set. FIG. 6 is a schematic diagram of the first PUCCH resource set, and as illustrated in FIG. 6, the first PUCCH resource set includes PUCCH 1 and PUCCH 3. Since PUCCH 1 and PUCCH 3 do not overlap, there is no overlapping PUCCH channel in the first PUCCH resource set, and PUCCH 1 and PUCCH 3 can be transmitted independently.

In some implementations, for the first PUCCH resource set illustrated in FIG. 6, if PUCCH 1 overlaps with a PUSCH, UCI carried by PUCCH 1 can be multiplexed onto the PUSCH overlapped with the PUCCH 1. Similarly, if PUCCH3 overlaps with the PUSCH, the UCI carried by PUCCH3 can be multiplexed onto the PUSCH overlapped with PUCCH3 for transmission.

In the channel determination method provided herein, a first PUCCH which cannot be multiplexed onto an uplink channel with a PDCCH carrying UCI with a high priority is removed in a time unit, so as to obtain a first PUCCH resource set; at least two PUCCH resources in the first PUCCH resource set can be multiplexed onto one uplink channel, and independent PUCCH resources in the first PUCCH resource set may be transmitted on independent uplink channels. In this way, the efficiency of PUCCH resource transmission can be improved, unnecessary multiplexing procedures can be avoided as far as possible, and the terminal device is easy to implement.

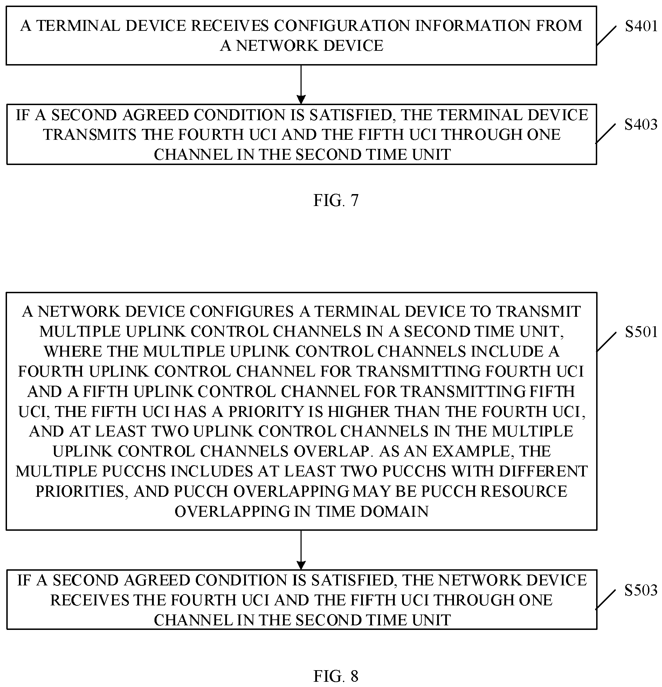

As illustrated in FIG. 7, a possible processing flow of the channel transmission method according to an implementation of the disclosure may at least include the following steps.

S401, a terminal device receives configuration information from a network device.

In some implementations, the terminal device is configured to transmit multiple PUCCHs in a second time unit, where the multiple PUCCHs include a fourth PUCCH for transmitting fourth UCI and a fifth PUCCH for transmitting fifth UCI, the fifth UCI has a higher priority than the fourth UCI, and at least two PUCCHs among the multiple PUCCHs overlap.

In some implementations, the second time unit may be one frame, one sub-frame, one slot, one sub-slot, or at least one symbol, etc.

In some implementations, "the terminal device is configured to transmit multiple PUCCHs in the second time unit" may be that the network device transmits configuration information to the terminal device, where the configuration device is used to configure the terminal device to transmit at least two PUCCHs in the second time unit.

In some implementations, the network device configures the terminal device to transmit two or more than two PUCCHs in the second time unit, and at least two PUCCHs among the multiple PUCCHs transmitted by the terminal device in the second time unit overlapped. For example, PUCCH overlapping may be PUCCH resource overlapping in time domain.

In some implementations, the information carried by the fourth UCI may the information borne or indicated by the fourth UCI, and the information carried by the fifth UCI may the information borne or indicated by the fifth UCI.

Step S403, if a second agreed condition is satisfied, the terminal device transmits the fourth UCI and the fifth UCI through one channel in the second time unit.

In some implementations, the second agreed condition is an agreed condition regarding the information carried by the fourth UCI and the information carried by the fifth UCI.

As an example, the fourth UCI satisfying the second agreed condition may include LP HARQ ACK/NACK, and the fifth UCI satisfying the second agreed condition may include HP HARQ ACK/NACK.

As another example, the fourth UCI satisfying the second agreed condition may include LP HARQ ACK/NACK, and the fifth UCI satisfying the second agreed condition may include HP SR.

In some implementations, if the fourth PUCCH and the fifth PUCCH overlap and the second agreed condition mentioned in S401 is satisfied, the fourth UCI and the fifth UCI can be multiplexed onto the same uplink channel.

In some implementations, the channel transmission method may further include the following.

S405, the terminal device drops the fifth UCI if the fourth UCI satisfies a third agreed condition, or the terminal device drops the fifth uplink control channel if the fourth UCI satisfies the third agreed condition.

In some implementations, the third agreed condition is an agreed condition regarding the information carried by the fourth UCI and the information carried by the fifth UCI.

As an example, the information carried by the fourth UCI may be information borne or indicated by the fourth UCI, and the information carried by the fifth UCI may be information borne or indicated by the fifth UCI.

In some implementation, the third agreed condition may include at least one of the following: the second agreed condition is not satisfied; the fifth UCI includes HP HARQ ACK/NACK and the fourth UCI includes CSI and/or LP SR.

As an example, the second agreed condition is not satisfied if the fourth UCI and the fifth UCI do not satisfy the following cases 1) and 2): 1) the fourth UCI is LP HARQ ACK/NACK, and the fifth UCI is HP HARQ ACK/NACK; 2) the fourth UCI is LP HARQ ACK/NACK and the fifth UCI is HP SR. In this scenario, the terminal device drops the fifth UCI or cancels the fifth UCI or skips the fifth UCI, alternatively, the terminal device drops the fifth PUCCH or cancels the fifth PUCCH or skips the fifth PUCCH.

As another example, if the fifth UCI is HP HARQ ACK/NACK and the fourth UCI is a LP CSI and/or LP SR, the terminal device drops the fifth UCI or cancels the fifth UCI or skips the fifth UCI, alternatively, the terminal device drops the fifth PUCCH or cancels the fifth PUCCH or skips the fifth PUCCH.

Still as another example, if the fifth UCI is HP SR and the fourth UCI is LP CSI, the terminal device drops the fifth UCI or cancels the fifth UCI or skips the fifth UCI, alternatively, the terminal device drops the fifth PUCCH or cancels the fifth PUCCH or skips the fifth PUCCH.

The CSI transmitted through the PUCCH may be an LP CSI by default.

In some implementations, the second time unit is a time unit corresponding to the fifth UCI; or the second time unit is a time unit corresponding to the fourth UCI; or the second time unit is the minimum time unit among the time unit corresponding to the fourth UCI and the time unit corresponding to the fifth UCI; or the second time unit is a maximum time unit among the time unit corresponding to the fourth UCI and the time unit corresponding to the fifth UCI.

As an example, the time unit corresponding to the fourth UCI may be a time unit corresponding to a PUCCH used for transmitting the fourth UCI. The time unit corresponding to the fifth UCI may be a time unit corresponding to a PUCCH used for transmitting the fifth UCI. The shortest time unit may be a time unit having the smallest number of time-domain symbols, and the longest time unit may be a time unit having the largest number of time-domain symbols. For example, the number of time domain symbols in the time unit corresponding to the fourth UCI is ten, and the number of time domain symbols in the time unit corresponding to the fifth UCI is twelve, if the second time unit is the shortest time unit among the time unit corresponding to the fourth UCI and the time unit corresponding to the fifth UCI, the second time unit is the time unit corresponding to the fourth UCI; if the second time unit is the longest time unit among the time unit corresponding to the fourth UCI and the time unit corresponding to the fifth UCI, the second time unit is the time unit corresponding to the fifth UCI.

As illustrated in FIG. 8, another possible processing flow of the channel transmission method according to an implementation of the disclosure may at least include the following steps.

S501, a network device configures a terminal device to transmit multiple uplink control channels in a second time unit, where the multiple uplink control channels include a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap. As an example, the multiple PUCCHs includes at least two PUCCHs with different priorities, and PUCCH overlapping may be PUCCH resource overlapping in time domain.

In some implementations, the network device transmits configuration information to the terminal device, and the confirmation information is used for configuring the terminal device to transmit at least two PUCCHs in the second time unit.

In some implementations, description regarding the fourth UCI and the fifth UCI is same to that regarding the fourth UCI and the fifth UCI in S401, and will not be repeated herein.

S503, if a second agreed condition is satisfied, the network device receives the fourth UCI and the fifth UCI through one channel in the second time unit.

In some implementations, description regarding the second agreed condition is same to that regarding the second agreed condition in S403, and will not be repeated herein.

In some implementations, the terminal device drops the fifth UCI if the fourth UCI satisfies a third agreed condition; or the terminal device drops the fifth uplink control channel if the fourth UCI satisfies the third agreed condition. In this scenario, the network device will not receive the fifth UCI and/or the fifth uplink control channel.

In some implementations, the third agreed condition is an agreed condition regarding the information carried by the fourth UCI and the information carried by the fifth UCI.

As an example, the information carried by the fourth UCI may be information borne or indicated by the fourth UCI, and the information carried by the fifth UCI may be information borne or indicated by the fifth UCI.

In some implementations, the third agreed condition may include at least one of the following: the second agreed condition is not satisfied; the fifth UCI includes HP HARQ ACK/NACK, and the fourth UCI includes CSI and/or LP SR.

As an example, the second agreed condition is not satisfied if the fourth UCI and the fifth UCI do not satisfy the following cases 1) and 2): 1) the fourth UCI is LP HARQ ACK/NACK, and the fifth UCI is HP HARQ ACK/NACK; 2) the fourth UCI is LP HARQ ACK/NACK and the fifth UCI is HP SR. In this scenario, the terminal device drops the fifth UCI or cancels the fifth UCI or skips the fifth UCI, alternatively, the terminal device drops the fifth PUCCH or cancels the fifth PUCCH or skips the fifth PUCCH.

As another example, if the fifth UCI is HP HARQ ACK/NACK and the fourth UCI is a LP CSI and/or LP SR, the terminal device drops the fifth UCI or cancels the fifth UCI or skips the fifth UCI, alternatively, the terminal device drops the fifth PUCCH or cancels the fifth PUCCH or skips the fifth PUCCH.

Still as another example, if the fifth UCI is HP SR and the fourth UCI is LP CSI, the terminal device drops the fifth UCI or cancels the fifth UCI or skips the fifth UCI, alternatively, the terminal device drops the fifth PUCCH or cancels the fifth PUCCH or skips the fifth PUCCH.

The CSI transmitted through the PUCCH may be an LP CSI by default.

In some implementations, the second time unit is a time unit corresponding to the fifth UCI; or the second time unit is a time unit corresponding to the fourth UCI; or the second time unit is the minimum time unit among the time unit corresponding to the fourth UCI and the time unit corresponding to the fifth UCI; or the second time unit is a maximum time unit among the time unit corresponding to the fourth UCI and the time unit corresponding to the fifth UCI.

As an example, the time unit corresponding to the fourth UCI may be a time unit corresponding to a PUCCH used for transmitting the fourth UCI. The time unit corresponding to the fifth UCI may be a time unit corresponding to a PUCCH used for transmitting the fifth UCI. The shortest time unit may be a time unit having the smallest number of time-domain symbols, and the longest time unit may be a time unit having the largest number of time-domain symbols. For example, the number of time domain symbols in the time unit corresponding to the fourth UCI is ten, and the number of time domain symbols in the time unit corresponding to the fifth UCI is twelve, if the second time unit is the shortest time unit among the time unit corresponding to the fourth UCI and the time unit corresponding to the fifth UCI, the second time unit is the time unit corresponding to the fourth UCI; if the second time unit is the longest time unit among the time unit corresponding to the fourth UCI and the time unit corresponding to the fifth UCI, the second time unit is the time unit corresponding to the fifth UCI.

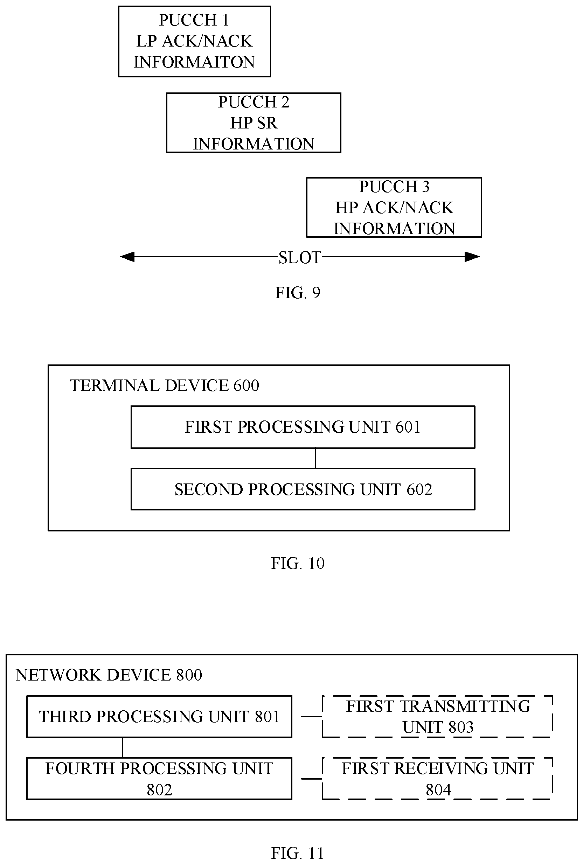

Taking another multiplexing illustrated in FIG. 9 as an example, PUCCH 1 is used for carrying LP HARQ feedback information, PUCCH 2 is used for carrying HP SR, and PUCCH 3 is used for carrying HP HARQ feedback information. Since the HP SR can be multiplexed with the LP HARQ feedback information, and the LP HARQ feedback information can be multiplexed with the HP HARQ feedback information, therefore, the HP SR, the HP HARQ feedback information, and the LP HARQ feedback information can be multiplexed onto one channel in the second time unit.

In the channel transmission method according to implementations of the disclosure, the network device configures for the terminal device that multiple PUCCHs in a time unit is PUCCHs satisfying the second agreed condition, such that the multiple PUCCHs configured by the network device can be multiplexed onto one uplink channel. In this way, the efficiency of PUCCH resource transmission can be improved, unnecessary multiplexing procedures can be avoided as far as possible, and the terminal device is easy to implement.

Taking the multiplexing illustrated in FIG. 2 as an example, the second time unit is one slot, PUCCH 1 is used for carrying LP HARQ feedback information, PUCCH 2 is used for carrying CSI, PUCCH 3 is used for carrying HP HARQ feedback information. Since the CSI cannot be multiplexed with the HP HARQ feedback information, in the second time unit, PUCCH 2 is canceled or the CSI is dropped.

In the channel transmission method according to implementations of the disclosure, the network device configures for the terminal device that multiple PUCCHs in a time unit is PUCCHs satisfying the third agreed condition, and only LP UCI is transmitted while transmission of PUCCHs carrying LP UCI is canceled. In this way, the terminal device is easy to implement.

In order to implement the channel determination method according to implementations of the disclosure, a terminal device is further provided. As illustrated in FIG. 10, an optional structure of a terminal device 600 includes a first processing unit 601 and a second processing unit 602.

The first processing unit 601 is configured to determine a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first UCI, and the second uplink control channel resource is used for transmitting second UCI, the second UCI has a priority higher than the first UCI, and the first UCI satisfies a first agreed condition.

The second processing unit 602 is configured to determine non-overlapping uplink control channel resources in the first time unit based on the first uplink control channel resource set.

In some implementations, the terminal device 600 is configured to transmit multiple uplink control channels in the first time unit, and at least two uplink control channels in the multiple uplink control channels overlap.

In some implementations, the first agreed condition includes that the first UCI and the second UCI cannot be multiplexed.

In some implementations, the first agreed condition is an agreed condition regarding information carried by the first UCI and information carried by the second UCI.

In some implementations, the second UCI includes HP HARQ feedback information, the first UCI includes LP CSI and/or LP SR.

In some implementations, the second UCI includes HP SR, and the first UCI includes LP CSI.

In some implementations, the first uplink control channel resource set consists of uplink control channel resources except the first uplink control channel resource in a second uplink control channel resource set, and the second uplink control channel resource set includes all uplink control channel resources in the first time unit.

In some implementations, the first processing unit 601 is configured to drop the first uplink control channel or drop the first UCI.

In some implementations, the first processing unit 601 is configured to drop the first uplink control channel if the first uplink control channel overlaps with a third uplink control channel, or the first uplink control channel is configured to transmit a third UCI if the first uplink control channel overlaps with the third uplink control channel, where the third UCI is UCI carried by the third uplink control channel. The third uplink control channel is one of the non-overlapping uplink control channel resources in the first time unit determined based on the first uplink control channel resource set.

In some implementations, the first time unit is a time unit corresponding to the second UCI, or the first time unit is a time unit corresponding to the first UCI, or the first time unit is a maximum time unit or a minimum time unit among the time unit corresponding to the first UCI and the time unit corresponding to the second UCI.

In order to implement the channel determination method according to implementations of the disclosure, a network device is further provided. As illustrated in FIG. 11, an optional structure of a network device 800 includes a third processing unit 801 and a fourth processing unit 802.

The third processing unit 801 is configured to determine a first uplink control channel resource set, where the first uplink control channel resource set does not include a first uplink control channel resource in a first time unit, the first uplink control channel resource set includes a second uplink control channel resource in the first time unit, where the first uplink control channel resource is used for transmitting first UCI, and the second uplink control channel resource is used for transmitting second UCI, the second UCI has a priority higher than the first UCI, and the first UCI satisfies a first agreed condition.

The fourth processing unit 802 is configured to determine non-overlapping uplink control channel resources in the first time unit based on the first uplink control channel resource set.

In some implementations, the network device 800 further includes a first transmitting unit 803, which is configured to configure the terminal device to transmit multiple uplink control channels in the first time unit, where at least two uplink control channels in the multiple uplink control channels overlap.

In some implementations, the first agreed condition includes that the first UCI and the second UCI cannot be multiplexed.

In some implementations, the first agreed condition is an agreed condition regarding information carried by the first UCI and information carried by the second UCI.

In some implementations, the second UCI includes HP HARQ feedback information, and the first UCI includes LP CSI and/or LP SR.

In some implementations, the second UCI includes HP SR, and the first UCI includes LP CSI.

In some implementations, the first uplink control channel resource set consists of uplink control channel resources except the first uplink control channel resource in a second uplink control channel resource set, and the second uplink control channel resource set includes all uplink control channel resources in the first time unit.

In some implementations, the third processing unit 801 is configured to drop the first uplink control channel or drop the first UCI.

In some implementations, the third processing unit 801 is configured to drop the first uplink control channel if the first uplink control channel overlaps with a third uplink control channel.

The network device further includes a first receiving unit 804, which is configured to receive a third UCI if the first uplink control channel overlaps with the third uplink control channel, where the third UCI is UCI carried by the third uplink control channel. Where the third uplink control channel is one of the non-overlapping uplink control channel resources in the first time unit determined based on the first uplink control channel resource set

In some implementations, the first time unit is a time unit corresponding to the second UCI; or the first time unit is a time unit corresponding to the first UCI; or the first time unit is a maximum time unit or a minimum time unit among the time unit corresponding to the first UCI and the time unit corresponding to the second UCI.

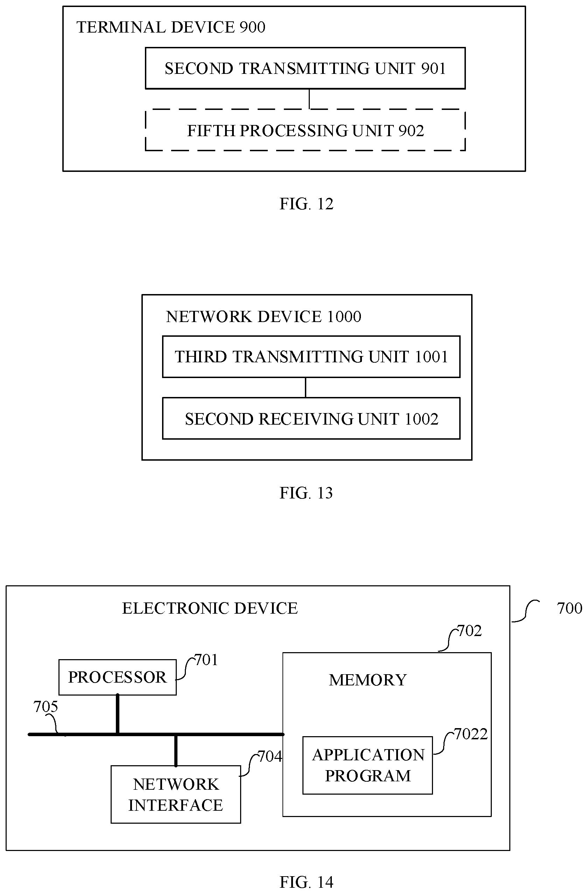

In order to implement the channel transmission method according to implementations of the disclosure, a terminal device is further provided. As illustrated in FIG. 12, another optional structure of a network device 900 includes a second transmitting unit 901.

The terminal device 900 is configured to transmit multiple uplink control channels in a second time unit, where the multiple uplink control channels includes a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap.

The second transmitting unit is configured to transmit the fourth UCI and the fifth UCI through one channel in the second time unit if a second agreed condition is satisfied.

In some implementations, the second agreed condition is an agreed condition regarding information carried by the fourth UCI and information carried by the fifth UCI.

In some implementations, the second agreed condition includes: the fifth UCI is LP HARQ feedback information, and the fourth UCI is LP HARQ feedback information; or the fifth UCI is HP SR, and the fourth UCI is LP HARQ feedback information.

In some implementations, the terminal device 900 further includes a fifth processing unit 902, which is configured to drop the fifth UCI if a third agreed condition is satisfied, or drop the fifth uplink control channel if the fourth UCI satisfies the third agreed condition.

In some implementations, the third agreed condition is an agreed condition regarding information carried by the fourth UCI and information carried by the fifth UCI.

In some implementations, the third agreed condition includes at least one of the following: the second agreed condition is not satisfied; the fifth UCI includes HP HARQ feedback information, and the fourth UCI includes LP CSI and/or LP SR; the fifth UCI includes LP SR, and the fourth UCI includes LP CSI.

In some implementations, the second time unit is a time unit corresponding to the fifth UCI; or the second time unit is a time unit corresponding to the fourth UCI; or the second time unit is a maximum time unit or a minimum time unit among the time unit corresponding to the fourth UCI and the time unit corresponding to the fifth UCI.

In some implementations, the fourth uplink control channel overlaps with the fifth uplink control channel.

In order to implement the channel transmission method according to implementations of the disclosure, a network device is further provided. As illustrated in FIG. 13, another optional structure of a network device 1000 includes a third transmitting unit 1001 and a second receiving unit 1002.

The third transmitting unit 1001 is configured to configure a terminal device to transmit multiple uplink control channels in a second time unit, where the multiple uplink control channels includes a fourth uplink control channel for transmitting fourth UCI and a fifth uplink control channel for transmitting fifth UCI, the fifth UCI has a priority is higher than the fourth UCI, and at least two uplink control channels in the multiple uplink control channels overlap.

The second receiving unit 1002 is configured to receive the fourth UCI and the fifth UCI through one channel within the second time unit if a second agreed condition is satisfied.

In some implementations, the second agreed condition is an agreed condition regarding information carried by the fourth UCI and information carried by the fifth UCI.

In some implementations, the second agreed condition includes: the fifth UCI is HP HARQ feedback information, and the fourth UCI is LP HARQ feedback information; or the fifth UCI is HP SR, and the fourth UCI is LP HARQ feedback information.

In some implementations, the fifth UCI is dropped by the terminal device if the fourth UCI satisfies a third agreed condition, or the fifth uplink control channel is dropped by the terminal device if the fourth UCI satisfies the third agreed condition.

In some implementations, the third agreed condition is an agreed condition regarding information carried by the fourth UCI and information carried by the fifth UCI.

In some implementations, the third agreed condition includes at least one of the following: the second agreed condition is not satisfied; the fifth UCI includes HP HARQ feedback information, and the fourth UCI includes LP CSI and/or LP SR; the fifth UCI includes LP SR, and the fourth UCI includes LP CSI.

In some implementations, the second time unit is a time unit corresponding to the fifth UCI; or the second time unit is a time unit corresponding to the fourth UCI; or the second time unit is a maximum time unit or a minimum time unit among the time unit corresponding to the fourth UCI and the time unit corresponding to the fifth UCI.

In some implementations, the fourth uplink control channel overlaps with the fifth uplink control channel.

It should be noted that, in implementations of the disclosure, functions of the first processing unit, the second processing unit, the third processing unit, the fourth processing unit, and the fifth processing unit may be implemented by a processor. Functions of the first transmitting unit, the second transmitting unit, and the third transmitting unit may be implemented by a transmitter or a transceiver. Functions of the first receiving unit and the second receiving unit may be implemented by a receiver or a transceiver.

In implementations of the disclosure, a terminal device is provided. The terminal device includes a processor and a memory storing computer programs that can run on the processor, where when running the computer programs, the processor is configured to make a terminal device equipped with the processor to perform steps of the above channel determination method.

In implementations of the disclosure, a network device is provided. The network device includes a processor and a memory storing computer programs that can run on the processor, where when running the computer programs, the processor is configured to make a network device equipped with the processor to perform steps of the above channel determination method.

In implementations of the disclosure, a terminal device is provided. The terminal device includes a processor and a memory storing computer programs that can run on the processor, where when running the computer programs, the processor is configured to make a terminal device equipped with the processor to perform steps of the above channel transmission method.

In implementations of the disclosure, a network device is provided. The network device includes a processor and a memory storing computer programs that can run on the processor, where when running the computer programs, the processor is configured to make a network device equipped with the processor to perform steps of the above channel transmission method.

In implementations of the disclosure, a chip is provided. The chip includes a processor configured to invoke and run computer programs in a memory, to cause a terminal device equipped with the chip to perform the channel determination method.

In implementations of the disclosure, a chip is provided. The chip includes a processor configured to invoke and run computer programs in a memory, to cause a network device equipped with the chip to perform the channel determination method.

In implementations of the disclosure, a chip is provided. The chip includes a processor configured to invoke and run computer programs in a memory, to cause a terminal device equipped with the chip to perform the channel transmission method.

In implementations of the disclosure, a chip is provided. The chip includes a processor configured to invoke and run computer programs in a memory, to cause a network device equipped with the chip to perform the channel transmission method.

In implementations of the disclosure, a storage medium is provided. The storage medium stores executable programs which, when executed by a processor, can implement the channel determination method executed by a terminal device.

In implementations of the disclosure, a storage medium is provided. The storage medium stores executable programs which, when executed by a processor, can implement the channel determination method executed by a network device.

In implementations of the disclosure, a storage medium is provided. The storage medium stores executable programs which, when executed by a processor, can implement the channel transmission method executed by a terminal device.

In implementations of the disclosure, a storage medium is provided. The storage medium stores executable programs which, when executed by a processor, can implement the channel transmission method executed by a network device.

In implementations of the disclosure, a computer program product is provided. The computer program product includes computer program instructions which cause a computer to implement the channel determination method executed by a terminal device.

In implementations of the disclosure, a computer program product is provided. The computer program product includes computer program instructions which cause a computer to implement the channel determination method executed by a network device.

In implementations of the disclosure, a computer program product is provided. The computer program product includes computer program instructions which cause a computer to implement the channel transmission method executed by a terminal device.

In implementations of the disclosure, a computer program product is provided. The computer program product includes computer program instructions which cause a computer to implement the channel transmission method executed by a network device.

In implementations of the disclosure, a computer program is provided, which causes a computer to implement the channel determination method executed by a terminal device.

In implementations of the disclosure, a computer program is provided, which causes a computer to implement the channel determination method executed by a network device.

In implementations of the disclosure, a computer program is provided, which causes a computer to implement the channel transmission method executed by a terminal device.

In implementations of the disclosure, a computer program is provided, which causes a computer to implement the channel transmission method executed by a network device.

FIG. 14 is a schematic structural diagram of hardware components of an electronic device (a terminal device or a network device) according to an implementation of the disclosure. The electronic device 700 includes at least one processor 701, a memory 702, and at least one network interface 704. The various components in the electronic device 700 are coupled together by a bus system 705. It is understood that the bus system 705 is used to implement connection and communication between these components. In addition to the data bus, the bus system 705 further includes a power bus, a control bus, and a status signal bus. However, in FIG. 14, various buses are labeled as the bus system 705 for the sake of clarity.

It can be understood that, the memory 702 according to implementations may be a volatile memory or a non-volatile memory, or may include both the volatile memory and the non-volatile memory. The non-volatile memory may be a read only memory (ROM), a programmable read only memory (programmable ROM, PROM), an erasable programmable read only memory (erasable PROM, EPROM), an electrically erasable programmable read only memory (electrically EPROM, EEPROM), a ferromagnetic random access memory (FRAM), a flash memory, a magnetic surface memory, an optical disc, or a compact disc read only memory (CD-ROM). The magnetic surface memory may be a magnetic disk memory or a magnetic tape memory. The volatile memory can be a RAM that acts as an external cache. By way of example but not limitation, many forms of RAM are available, such as a static random access memory (static RAM, SRAM), a synchronous static random access memory (SSRAM), a dynamic random access memory (dynamic RAM, DRAM), a synchronous dynamic random access memory (synchronous DRAM, SDRAM), a double data rate SDRAM (DDRSDRAM), an enhanced synchronous dynamic random access memory (ESDRAM), a sync-link dynamic random access memory (SLDRAM), and a direct rambus random access memory (direct rambus RAM, DRRAM). The memory 702 described herein is intended to include, but is not limited to, these and any other suitable types of memory.

The memory 702 according to implementations is configured to store various types of data to support operations of the electronic device 700. Examples of these data may include any computer program run on the electronic device 700, such as an application 7022. Programs for performing the method provided in implementations can be included in the application 7022.

The method disclosed in the foregoing implementations is applicable to the processor 701, or may be performed by the processor 701. The processor 701 may be an integrated circuit chip with signal processing capabilities. During implementation, each step of the foregoing method may be completed by an integrated logic circuit of hardware in the processor 701 or an instruction in the form of software. The processor 701 may be a general-purpose processor, a digital signal processor (DSP), other programmable logic devices (PLD), discrete gates or transistor logic devices, discrete hardware components, or the like. The methods, steps, and logic blocks disclosed in implementations can be implemented or executed by the processor 701. The general purpose processor may be a microprocessor, or the processor may be any conventional processor or the like. The steps of the method disclosed in implementations may be directly implemented as a hardware decoding processor, or may be performed by hardware and software modules in the decoding processor. The software module can be located in a storage medium. The storage medium is located in the memory 702. The processor 701 reads information in the memory 702, and completes the steps of the method described above with the hardware thereof.

According to implementations, the electronic device 700 can be implemented by one or more of an application specific integrated circuit (ASIC), the DSP, the PLD, a complex programmable logic device (CPLD), a field programmable gate array (FPGA), the general-purpose processor, a controller, a microcontroller unit (MCU), a microprocessor unit (MPU), or other electronic components, to perform the foregoing method.

The disclosure is described herein with reference to schematic flowcharts and/or block diagrams of methods, devices (systems), and computer program products according to the implementations. It should be understood that each flow and/or block in the flowchart and/or block diagram, and a combination of flow and/or block in the flowchart and/or block diagram can be implemented by computer program instructions. These computer program instructions may be provided to a general purpose computer, a special purpose computer, an embedded processor, or a processor of other programmable data processing devices to form a machine, such that devices for implementing functions specified by one or more flows in the flowchart and/or one or more blocks in the block diagram may be generated by executing the instructions with the processor of the computer or other programmable data processing devices.

The computer program instructions may also be stored in a computer-readable memory that can direct the computer or other programmable data processing devices to operate in a given manner, such that the instructions stored in the computer-readable memory produce a manufactured article including an instruction device, and the instruction device implements the functions specified by one or more flows in the flowchart and/or one or more blocks in the block diagram.

The computer program instructions may also be loaded onto the computer or other programmable data processing devices, such that a series of process steps may be executed on the computer or other programmable devices to produce processing implemented by the computer, so that the instructions executed on the computer or other programmable devices provide steps for implementing the functions specified by one or more flows in the flowchart and/or one or more blocks in the block diagram.

It should be understood that, in this disclosure, the terms "system" and "network" are generally used interchangeably herein. In this disclosure, the term "and/or" is merely an association relationship for describing associated objects, and indicates that three relationships may exist. For example, A and/or B may indicate three cases: A exists separately, A and B exist simultaneously, and B exists separately. In addition, the character "/" in the disclosure generally indicates that the former and latter associated objects are in an "or" relationship.

The foregoing descriptions are merely exemplary implementations of the disclosure, but are not intended to limit the scope of protection of the disclosure. Any modification, equivalent replacement, and improvement made within the spirit and principle of the disclosure shall belong to the scope of protection of the disclosure.

## Claims

1. A channel determination method, comprising:
determining, by a terminal device, a first uplink control channel resource set, wherein the first uplink control channel resource set does not comprise a first uplink control channel resource in a first time unit, the first uplink control channel resource set comprises a second uplink control channel resource in the first time unit, wherein the first uplink control channel resource is used for transmitting first uplink control information (UCI), the second uplink control channel resource is used for transmitting second UCI, the second UCI has a priority higher than the first UCI, and the first UCI satisfies a first agreed condition; and
determining, by the terminal device, non-overlapping uplink control channel resources in the first time unit based on the first uplink control channel resource set.

2. The method according to claim 1, wherein the terminal device is configured to transmit a plurality of uplink control channels in the first time unit, and at least two uplink control channels in the plurality of uplink control channels overlap.

3. The method according to claim 1 or 2, wherein the first agreed condition comprises: the first UCI and the second UCI cannot be multiplexed.

4. The method according to any one of claims 1 to 3, wherein the first agreed condition is an agreed condition regarding information carried by the first UCI and information carried by the second UCI.

5. The method according to any one of claims 1 to 4, wherein the second UCI comprises high priority hybrid automatic repeat request (HARQ) feedback information, the first UCI comprises low priority channel state information (CSI) and/or a low priority scheduling request (SR).

6. The method according to any one of claims 1 to 4, wherein the second UCI comprises a high priority SR, and the first UCI comprises low priority CSI.

7. The method according to any one of claims 1 to 6, wherein the first uplink control channel resource set consists of uplink control channel resources except the first uplink control channel resource in a second uplink control channel resource set, and the second uplink control channel resource set comprises all uplink control channel resources in the first time unit.

8. The method according to any one of claims 1 to 7, further comprising:
dropping the first uplink control channel; or
dropping the first UCI.

9. The method according to claim 8, wherein
the first uplink control channel is dropped if the first uplink control channel overlaps with a third uplink control channel; or
a third UCI is transmitted if the first uplink control channel overlaps with the third uplink control channel, wherein the third UCI is UCI carried by the third uplink control channel;
wherein the third uplink control channel is one of the non-overlapping uplink control channel resources in the first time unit determined based on the first uplink control channel resource set.

10. The method according to any of claims 1 to 9, wherein,
the first time unit is a time unit corresponding to the second UCI; or
the first time unit is a time unit corresponding to the first UCI; or
the first time unit is a maximum time unit or a minimum time unit among the time unit corresponding to the first UCI and the time unit corresponding to the second UCI.

11. A channel determination method, comprising:
determining, by a network device, a first uplink control channel resource set, wherein the first uplink control channel resource set does not comprise a first uplink control channel resource in a first time unit, the first uplink control channel resource set comprises a second uplink control channel resource in the first time unit, wherein the first uplink control channel resource is used for transmitting first uplink control information (UCI), the second uplink control channel resource is used for transmitting second UCI, the second UCI has a priority higher than the first UCI, and the first UCI satisfies a first agreed condition; and
determining, by the network device, non-overlapping uplink control channel resources in the first time unit based on the first uplink control channel resource set.

12. The method according to claim 11, wherein the network device configures the terminal device to transmit a plurality of uplink control channels in the first time unit, and at least two uplink control channels in the plurality of uplink control channels overlap.

13. The method according to claim 11 or 12, wherein the first agreed condition comprises: the first UCI and the second UCI cannot be multiplexed.

14. The method according to any one of claims 11 to 13, wherein the first agreed condition is an agreed condition regarding information carried by the first UCI and information carried by the second UCI.

15. The method according to any one of claims 11 to 14, wherein the second UCI comprises high priority hybrid automatic repeat request (HARQ) feedback information, the first UCI comprises low priority channel state information (CSI) and/or a low priority scheduling request (SR).

16. The method according to any one of claims 11 to 14, wherein the second UCI comprises a high priority SR, and the first UCI comprises low priority CSI.

17. The method according to any one of claims 11 to 16, wherein the first uplink control channel resource set consists of uplink control channel resources except the first uplink control channel resource in a second uplink control channel resource set, and the second uplink control channel resource set comprises all uplink control channel resources in the first time unit.

18. The method according to any one of claims 11 to 17, further comprising:
dropping the first uplink control channel; or
dropping the first UCI.

19. The method according to claim 18, wherein
the first uplink control channel is dropped if the first uplink control channel overlaps with a third uplink control channel; or
the network device receives a third UCI if the first uplink control channel overlaps with the third uplink control channel, wherein the third UCI is UCI carried by the third uplink control channel;
wherein the third uplink control channel is one of the non-overlapping uplink control channel resources in the first time unit determined based on the first uplink control channel resource set.

20. The method according to any of claims 11 to 19, wherein,
the first time unit is a time unit corresponding to the second UCI; or
the first time unit is a time unit corresponding to the first UCI; or
the first time unit is a maximum time unit or a minimum time unit among the time unit corresponding to the first UCI and the time unit corresponding to the second UCI.

21. A channel transmission method, comprising:
a terminal device being configured to transmit a plurality of uplink control channels in a second time unit, wherein the plurality of uplink control channels comprises a fourth uplink control channel for transmitting fourth uplink control information (UCI) and a fifth uplink control channel for transmitting fifth UCI, wherein the fifth UCI has a priority is higher than the fourth UCI, and at least two uplink control channels in the plurality of uplink control channels overlap; and
transmitting, by the terminal device, the fourth UCI and the fifth UCI through one channel in the second time unit if a second agreed condition is satisfied.

22. The method according to claim 21, wherein the second agreed condition is an agreed condition regarding information carried by the fourth UCI and information carried by the fifth UCI.

23. The method according to claim 21 or 22, wherein the second agreed condition comprises:
the fifth UCI is high priority hybrid automatic repeat request (HARQ) feedback information, and the fourth UCI is low priority HARQ feedback information; or
the fifth UCI is a high priority scheduling request (SR), and the fourth UCI is low priority HARQ feedback information.

24. The method according to any one of claims 21 to 23, further comprising:
dropping, by the terminal device, the fifth UCI if the fourth UCI satisfies a third agreed condition; or
dropping, by the terminal device, the fifth uplink control channel if the fourth UCI satisfies the third agreed condition.

25. The method according to claim 24, wherein the third agreed condition is an agreed condition regarding information carried by the fourth UCI and information carried by the fifth UCI.

26. The method according to claim 24 or 25, wherein the third agreed condition comprises at least one of the following:
the second agreed condition is not satisfied;
the fifth UCI comprises high priority HARQ feedback information, and the fourth UCI comprises low priority channel state information (CSI) and/or a low priority SR; and
the fifth UCI comprises a high priority SR, and the fourth UCI comprises low priority CSI.

27. The method according to any one of claims 21 to 26, wherein
the second time unit is a time unit corresponding to the fifth UCI; or
the second time unit is a time unit corresponding to the fourth UCI; or
the second time unit is a maximum time unit or a minimum time unit among the time unit corresponding to the fourth UCI and the time unit corresponding to the fifth UCI.

28. The method according to any one of claims 21 to 27, wherein the fourth uplink control channel overlaps with the fifth uplink control channel.

29. A channel transmission method, comprising:
configuring, by a network device, a terminal device to transmit a plurality of uplink control channels in a second time unit, wherein the plurality of uplink control channels comprises a fourth uplink control channel for transmitting fourth uplink control information (UCI) and a fifth uplink control channel for transmitting fifth UCI, the fifth UCI has a priority is higher than the fourth UCI, and at least two uplink control channels in the plurality of uplink control channels overlap; and
receiving, by the network device, the fourth UCI and the fifth UCI through one channel within the second time unit if a second agreed condition is satisfied.

30. The method according to claim 29, wherein the second agreed condition is an agreed condition regarding information carried by the fourth UCI and information carried by the fifth UCI.

31. The method according to claim 29 or 30, wherein the second agreed condition comprises:
the fifth UCI is high priority hybrid automatic repeat request (HARQ) feedback information, and the fourth UCI is low priority HARQ feedback information; or
the fifth UCI is a high priority scheduling request (SR), and the fourth UCI is low priority HARQ feedback information.

32. The method according to any one of claims 29 to 31, wherein,
the fifth UCI is dropped by the terminal device if the fourth UCI satisfies a third agreed condition; or
the fifth uplink control channel is dropped by the terminal device if the fourth UCI satisfies the third agreed condition.

33. The method according to claim 32, wherein the third agreed condition is an agreed condition regarding information carried by the fourth UCI and information carried by the fifth UCI.

34. The method according to claim 32 or 33, wherein the third agreed condition comprises at least one of the following:
the second agreed condition is not satisfied;
the fifth UCI comprises high priority HARQ feedback information, and the fourth UCI comprises low priority CSI and/or a low priority SR;
the fifth UCI comprises a high priority SR, and the fourth UCI comprises low priority CSI.

35. The method according to any one of claims 29 to 34, wherein
the second time unit is a time unit corresponding to the fifth UCI; or
the second time unit is a time unit corresponding to the fourth UCI; or
the second time unit is a maximum time unit or a minimum time unit among the time unit corresponding to the fourth UCI and the time unit corresponding to the fifth UCI.

36. The method according to any one of claims 29 to 35, wherein the fourth uplink control channel overlaps with the fifth uplink control channel.

37. A terminal device, comprising:
a first processing unit, configured to determine a first uplink control channel resource set, wherein the first uplink control channel resource set does not comprise a first uplink control channel resource in a first time unit, the first uplink control channel resource set comprises a second uplink control channel resource in the first time unit, wherein the first uplink control channel resource is used for transmitting first uplink control information (UCI), the second uplink control channel resource is used for transmitting second UCI, the second UCI has a priority higher than the first UCI, and the first UCI satisfies a first agreed condition; and
a second processing unit, configured to determine non-overlapping uplink control channel resources in the first time unit based on the first uplink control channel resource set.

38. The terminal device according to claim 37, wherein the terminal device is configured to transmit a plurality of uplink control channels in the first time unit, and at least two uplink control channels in the plurality of uplink control channels overlap.

39. The terminal device according to claim 37 or 38, wherein the first agreed condition comprises: the first UCI and the second UCI cannot be multiplexed.

40. The terminal device according to any one of claims 37 to 39, wherein the first agreed condition is an agreed condition regarding information carried by the first UCI and information carried by the second UCI.

41. The terminal device according to any one of claims 37 to 40, wherein the second UCI comprises high priority hybrid automatic repeat request (HARQ) feedback information, the first UCI comprises low priority channel state information (CSI) and/or a low priority scheduling request (SR).

42. The terminal device according to any one of claims 37 to 40, wherein the second UCI comprises a high priority SR, the first UCI comprises low priority CSI.

43. The terminal device according to any one of claims 37 to 42, wherein the first uplink control channel resource set consists of uplink control channel resources except the first uplink control channel resource in a second uplink control channel resource set, and the second uplink control channel resource set comprises all uplink control channel resources in the first time unit.

44. The terminal device according to any one of claims 37 to 43, wherein the first processing unit is configured to drop the first uplink control channel or drop the first UCI.

45. The terminal device according to claim 44, wherein
the first processing unit is configured to drop the first uplink control channel if the first uplink control channel overlaps with a third uplink control channel; or
the first uplink control channel is used to transmit a third UCI if the first uplink control channel overlaps with the third uplink control channel, wherein the third UCI is UCI carried by the third uplink control channel;
wherein the third uplink control channel is one of the non-overlapping uplink control channel resources in the first time unit determined based on the first uplink control channel resource set.

46. The terminal device according to any of claims 37 to 45, wherein,
the first time unit is a time unit corresponding to the second UCI; or
the first time unit is a time unit corresponding to the first UCI; or
the first time unit is a maximum time unit or a minimum time unit among the time unit corresponding to the first UCI and the time unit corresponding to the second UCI.

47. A network device, comprising:
a third processing unit, configured to determine a first uplink control channel resource set, wherein the first uplink control channel resource set does not comprise a first uplink control channel resource in a first time unit, the first uplink control channel resource set comprises a second uplink control channel resource in the first time unit, wherein the first uplink control channel resource is used for transmitting first uplink control information (UCI), the second uplink control channel resource is used for transmitting second UCI, the second UCI has a priority higher than the first UCI, and the first UCI satisfies a first agreed condition; and
a fourth processing unit, configured to determine non-overlapping uplink control channel resources in the first time unit based on the first uplink control channel resource set.

48. The network device according to claim 47, further comprising:
a first transmitting unit, configured to configure the terminal device to transmit a plurality of uplink control channels in the first time unit, wherein at least two uplink control channels in the plurality of uplink control channels overlap.

49. The network device according to claim 47 or 48, wherein the first agreed condition comprises that the first UCI and the second UCI cannot be multiplexed.

50. The network device according to any one of claims 47 to 49, wherein the first agreed condition is an agreed condition regarding information carried by the first UCI and information carried by the second UCI.

51. The network device according to any one of claims 47 to 50, wherein the second UCI comprises high priority hybrid automatic repeat request (HARQ)feedback information, the first UCI comprises low priority channel state information (CSI) and/or a low priority scheduling request (SR).

52. The network device according to any one of claims 47 to 50, wherein the second UCI comprises a high priority SR, the first UCI comprises low priority CSI.

53. The network device according to any one of claims 47 to 52, wherein the first uplink control channel resource set consists of uplink control channel resources except the first uplink control channel resource in a second uplink control channel resource set, and the second uplink control channel resource set comprises all uplink control channel resources in the first time unit.

54. The network device according to any one of claims 47 to 53, wherein the third processing unit is configured to drop the first uplink control channel or drop the first UCI.

55. The network device according to claim 54, wherein
the third processing unit is configured to drop the first uplink control channel if the first uplink control channel overlaps with a third uplink control channel; or
the network device further comprises a first receiving unit, configured to receive a third UCI if the first uplink control channel overlaps with the third uplink control channel, wherein the third UCI is UCI carried by the third uplink control channel;
wherein the third uplink control channel is one of the non-overlapping uplink control channel resources in the first time unit determined based on the first uplink control channel resource set.

56. The network device according to any of claims 47 to 55, wherein,
the first time unit is a time unit corresponding to the second UCI; or
the first time unit is a time unit corresponding to the first UCI; or
the first time unit is a maximum time unit or a minimum time unit among the time unit corresponding to the first UCI and the time unit corresponding to the second UCI.

57. A terminal device, being configured to transmit a plurality of uplink control channels in a second time unit, wherein the plurality of uplink control channels comprises a fourth uplink control channel for transmitting fourth uplink control information (UCI) and a fifth uplink control channel for transmitting fifth UCI, wherein the fifth UCI has a priority is higher than the fourth UCI, and at least two uplink control channels in the plurality of uplink control channels overlap, and comprising:
a second transmitting unit, configured to transmit the fourth UCI and the fifth UCI through one channel in the second time unit if a second agreed condition is satisfied.

58. The terminal device according to claim 57, wherein the second agreed condition is an agreed condition regarding information carried by the fourth UCI and information carried by the fifth UCI.

59. The terminal device according to claim 57 or 58, wherein the second agreed condition comprises:
the fifth UCI is high priority hybrid automatic repeat request (HARQ) feedback information, and the fourth UCI is low priority HARQ feedback information; or
the fifth UCI is a high priority scheduling request (SR), and the fourth UCI is low priority HARQ feedback information.

60. The terminal device according to any one of claims 57 to 59, further comprising:
a fifth processing unit, configured to drop the fifth UCI if a third agreed condition is satisfied, or drop the fifth uplink control channel if the fourth UCI satisfies the third agreed condition.

61. The terminal device according to claim 60, wherein the third agreed condition is an agreed condition regarding information carried by the fourth UCI and information carried by the fifth UCI.

62. The terminal device according to claim 60 or 61, wherein the third agreed condition comprises at least one of the following:
the second agreed condition is not satisfied;
the fifth UCI comprises high priority HARQ feedback information, and the fourth UCI comprises low priority channel state information (CSI) and/or a low priority scheduling request (SR); and
the fifth UCI comprises a high priority SR, and the fourth UCI comprises low priority CSI.

63. The terminal device according to any one of claims 57 to 62, wherein
the second time unit is a time unit corresponding to the fifth UCI; or
the second time unit is a time unit corresponding to the fourth UCI; or
the second time unit is a maximum time unit or a minimum time unit among the time unit corresponding to the fourth UCI and the time unit corresponding to the fifth UCI.

64. The terminal device according to any one of claims 57 to 63, wherein the fourth uplink control channel overlaps with the fifth uplink control channel.

65. A network device, comprising:
a third transmitting unit, configured to configure a terminal device to transmit a plurality of uplink control channels in a second time unit, wherein the plurality of uplink control channels comprises a fourth uplink control channel for transmitting fourth uplink control information (UCI) and a fifth uplink control channel for transmitting fifth UCI, wherein the fifth UCI has a priority is higher than the fourth UCI, and at least two uplink control channels in the plurality of uplink control channels overlap; and
a second receiving unit, configured to receive the fourth UCI and the fifth UCI through one channel within the second time unit when a second agreed condition is satisfied.

66. The network device according to claim 65, wherein the second agreed condition is an agreed condition regarding information carried by the fourth UCI and information carried by the fifth UCI.

67. The network device according to claim 65 or 66, wherein the second agreed condition comprises:
the fifth UCI is high priority hybrid automatic repeat request (HARQ) feedback information, and the fourth UCI is low priority HARQ feedback information; or
the fifth UCI is a high priority scheduling request (SR), and the fourth UCI is low priority HARQ feedback information.

68. The network device according to any one of claims 65 to 67, wherein
the fifth UCI is dropped by the terminal device if the fourth UCI satisfies a third agreed condition; or
the fifth uplink control channel is dropped by the terminal device if the fourth UCI satisfies the third agreed condition.

69. The network device according to claim 68, wherein the third agreed condition is an agreed condition regarding information carried by the fourth UCI and information carried by the fifth UCI.

70. The network device according to claim 68 or 69, wherein the third agreed condition comprises at least one of the following:
the second agreed condition is not satisfied;
the fifth UCI comprises high priority HARQ feedback information, and the fourth UCI comprises low priority CSI and/or a low priority SR;
the fifth UCI comprises a high priority SR, and the fourth UCI comprises low priority CSI.

71. The network device according to any one of claims 65 or 70, wherein
the second time unit is a time unit corresponding to the fifth UCI; or
the second time unit is a time unit corresponding to the fourth UCI; or
the second time unit is a maximum time unit or a minimum time unit among the time unit corresponding to the fourth UCI and the time unit corresponding to the fifth UCI.

72. The network device according to any one of claims 65 or 71, wherein the fourth uplink control channel overlaps with the fifth uplink control channel.

73. A terminal device, comprising a processor and a memory storing computer programs that can run on the processor, wherein when running the computer programs, the processor is configured to perform steps of the channel determination method of any one of claims 1 to 10.

74. A network device, comprising a processor and a memory storing computer programs that can run on the processor, wherein when running the computer programs, the processor is configured to perform steps of the channel determination method of any one of claims 11 to 20.

75. A terminal device, comprising a processor and a memory storing computer programs that can run on the processor, wherein when running the computer programs, the processor is configured to perform steps of the channel determination method of any one of claims 21 to 28.

76. A network device, comprising a processor and a memory storing computer programs that can run on the processor, wherein when running the computer programs, the processor is configured to perform steps of the channel transmission method of any one of claims 29 to 36.

77. A storage medium, storing executable programs which, when executed by a processor, implement the channel determination method of any one of claims 1 to 10.

78. A storage medium, storing executable programs which, when executed by a processor, implement the channel determination method of any one of claims 11 to 20.

79. A storage medium, storing executable programs which, when executed by a processor, implement the channel transmission method of any one of claims 21 to 28.

80. A storage medium, storing executable programs which, when executed by a processor, implement the channel transmission method of any one of claims 29 to 36.

81. A computer program product, comprising computer program instructions which cause a computer to perform the channel determination method of any one of claims 1 to 10.

82. A computer program product, comprising computer program instructions which cause a computer to perform the channel determination method of any one of claims 11 to 20.

83. A computer program product, comprising computer program instructions which cause a computer to perform the channel transmission method of any one of claims 21 to 28.

84. A computer program product, comprising computer program instructions which cause a computer to perform the channel transmission method of any one of claims 29 to 36.

85. A computer program, causing a computer to perform the channel determination method of any one of claims 1 to 10.

86. A computer program, causing a computer to perform the channel determination method of any one of claims 11 to 20.

87. A computer program, causing a computer to perform the channel determination method of any one of claims 21 to 28.

88. A computer program, causing a computer to perform the channel determination method of any one of claims 29 to 36.

89. A chip, comprising a processor configured to invoke and run computer programs in a memory, to cause a device equipped with the chip to perform the channel determination method of any one of claims 1 to 10.

90. A chip, comprising a processor configured to invoke and run computer programs in a memory, to cause a device equipped with the chip to perform the channel determination method of any one of claims 11 to 20.

91. A chip, comprising a processor configured to invoke and run computer programs in a memory, to cause a device equipped with the chip to perform the channel transmission method of any one of claims 21 to 28.

92. A chip, comprising a processor configured to invoke and run computer programs in a memory, to cause a device equipped with the chip to perform the channel transmission method of any one of claims 29 to 36.
